# EUROPEAN PATENT SPECIFICATION

(11) **EP 0 857 618 B1**
(45) Date of publication and mention of the grant of the patent: **02.06.2004**
(21) Application number: 98300678.4
(22) Date of filing: 30.01.1998
(51) Int. Cl.: B60R 16/02

(54) **Engine having offset cylinder banks**
Brennkraftmaschine mit versetzten Zylinderbänken
Moteur de véhicule avec des blocs cylindres décalés

(30) Priority: 10.02.1997 JP 2697497
(43) Date of publication of application: 12.08.1998
(73) Proprietor: FUJI JUKOGYO KABUSHIKI KAISHA, Tokyo (JP)
(72) Inventor: Iino, Tatsuo, Nerima-ku, Tokyo (JP)
(74) Representative: W.P. THOMPSON & CO.

(56) References cited:
- DE-A- 3 342 821
- DE-A- 4 303 908
- US-A- 4 838 221
- US-A- 5 136 998
- US-A- 5 207 186
- US-A- 5 253 143

## Description

The present invention relates to an engine according to the preamble of claim 1.

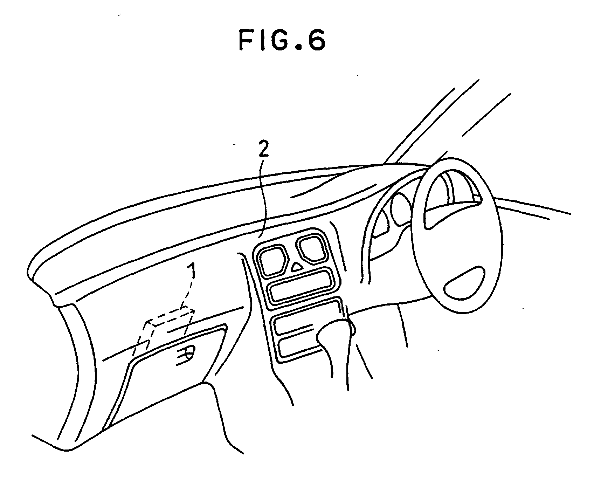

Generally, as shown in Fig. 6, an engine control unit 1 for controlling fuel injection amount, ignition timing and the like is disposed on the inner side of a front panel 2 of the passenger compartment or on the floor under a seat.

However, the engine control unit disposed in the passenger compartment has problems such as needing long lead wires in order to connect the engine control unit with each of various sensors, fuel injectors, an ignitor and other actuators.

Japanese Utility Model Application Laid-open No. Jitsu-Kai-Shou 56-5237 discloses a technique in which an engine control unit is installed in the engine compartment in order to solve these problems. A major problem on installing the engine control unit in the engine compartment is how to protect the engine control unit from heat, electromagnetic field and electrical noises.

DE 33 42 821 discloses an engine having cylinders arranged in two rows according to the preamble of claim 1.

US 5, 136, 998 discloses engines wherein the sensor is enclosed in the same housing that contains the electric controller, the housing being mounted directly on the engine.

In the case of this prior art, the heat problem is solved by enclosing the engine control unit with a heat insulation box and in addition cooling the engine control unit with fuel passing through a fuel pipe provided in the heat insulation box.

However, since the heat insulation box is required to be placed around the fuel pipe, the location of the engine control unit is restricted by the relationship with the fuel pipe arranged in the engine compartment.

On the other hand, because the engine control unit is connected with various sensors and actuators, the engine has so many lead wires and connecting terminals. In modern automobiles, these lead wires and terminals are integrated as a so-called wiring harness. There is an optimum design in arranging the wiring harness in the engine and this design also restricts the location of the engine control unit.

Therefore, it is very difficult to find the best location of the engine control unit close to the fuel pipe in the engine compartment while retaining the best design of wiring harness.

Further, the engine control unit is enclosed by the heat insulation box and therefore ground terminals for inner electrical components must extend to outside of the heat insulation box. This results in a complicated construction of the heat insulation box.

With the above described problems in mind, it is an object of the present invention to provide a vehicular engine with a control unit mounting apparatus for enabling the length of wiring harnesses to be shortened and for facilitating an arrangement thereof.

According to the invention there is provided an engine comprising a left bank for internal combustion and a right bank for internal combustion, said left and right banks being staggered so as to provide a left offset portion on said left side and a right offset portion on said right side, characterised by:
electrical equipment provided in either one of said left offset portion or said right offset portion for controlling said engine; and
an engine control unit provided in the other offset portion for controlling said electrical equipment.

Another object of the present invention is to provide an engine control unit mounting apparatus at a place where the engine control unit is not subjected to strong electromagnetic field or electrical noises generated from electrical components such as an alternator, an air-conditioner compressor and a battery. To achieve the object, these electrical components are disposed at a remote place from the engine control unit, e.g. at a space of another offset portion of the left bank.

A further object of the present invention is to provide an engine control unit mounting apparatus having a good heat radiation performance. To attain the object, the engine control unit mounting apparatus is constituted by a good heat conductive material such as aluminum alloy.

By way of example only, a specific embodiment of the present invention will now be described, with reference to the accompanying drawings, in which:-
Fig. 1 is a top view showing an arrangement of an engine and surrounding equipment in an engine compartment;

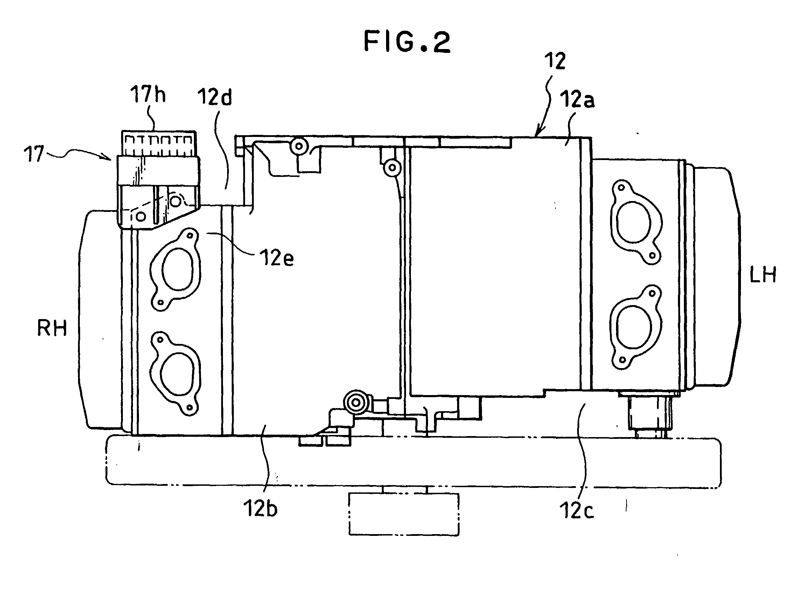

Fig. 2 is a top view showing an engine equipped with an engine control unit mounting apparatus according to the present invention;

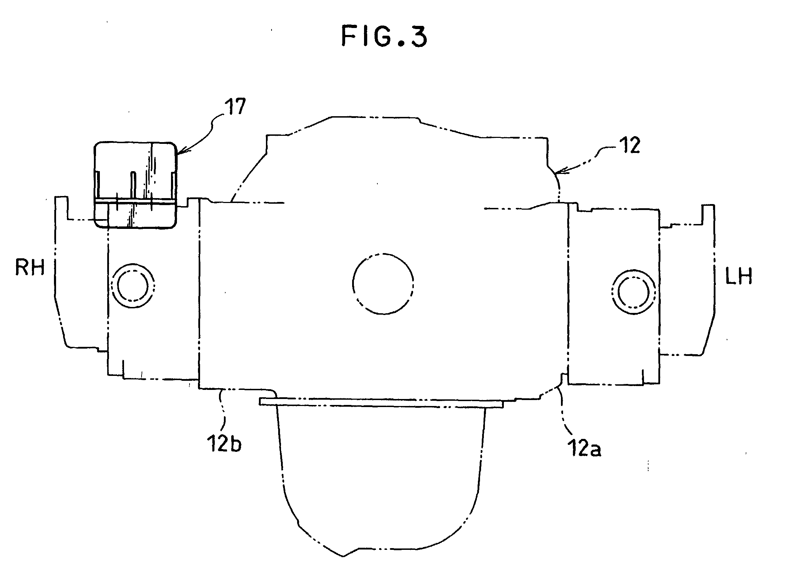

Fig. 3 is a front view showing an engine equipped with an engine control unit mounting apparatus according to the present invention;
Fig. 4 is a side view showing an engine equipped with an engine control unit mounting apparatus according to the present invention;
Fig. 5a is a top view of an engine control unit mounting apparatus according to the present invention;
Fig. 5b is a front view of an engine control unit mounting apparatus according to the present invention;
Fig. 5c is a side view of an engine control unit mounting apparatus according to the present invention; and
Fig. 6 is a perspective view showing an arrangement of an engine control unit according to a prior art.

Reference will hereinafter be made to the drawings in order to facilitate understanding of the present invention.

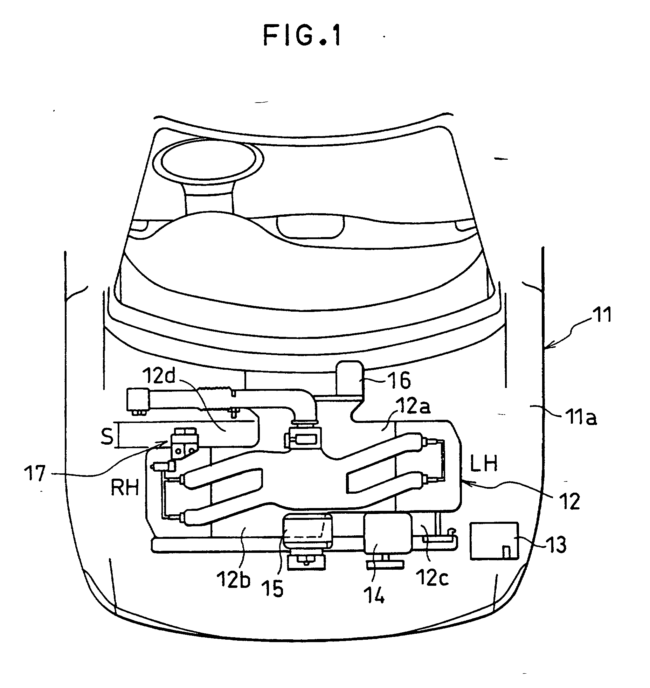

Referring now to Fig. 1, an engine 12 is mounted longitudinally in an engine compartment 11a provided at the frontal portion of a vehicle 11. In this embodiment, the engine 12 is a horizontally opposed four cylinder engine. Since each cylinder is arranged interchangeably with respect to lefthand (LH)and right-hand (RH) banks 12a, 12b of a cylinder block, the LH bank 12a is offset to the RH bank 12b in the rearward direction. As a result, a LH offset portion 12c is formed at the front end of the LH bank and a RH offset portion 12d is formed at the rear end of the RH bank.

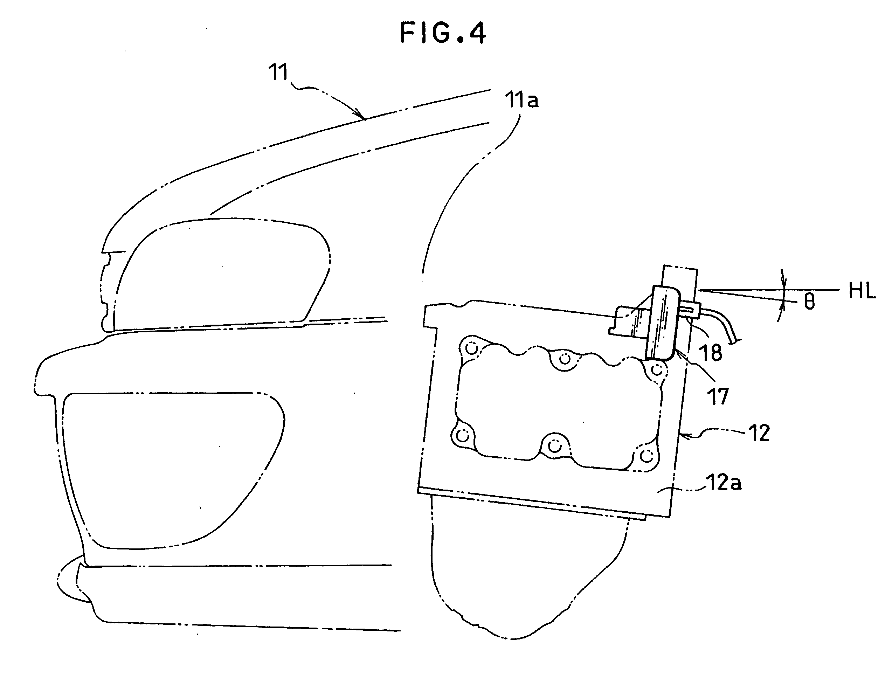

Further, as shown in Fig. 4, the engine 12 is slanted upwardly at a specified angle θ (in this embodiment, 7 degrees) with respect to a horizontal line HL.

A battery 13 is disposed at the left front corner of the engine compartment 11a and an air-conditioner compressor 14 is disposed at the LH offset portion 12c of the engine 12. Further, an alternator 15 is mounted at the front center of the engine 12 and a starting motor 16 is mounted at the rear left end of the engine 12. These items of electrical equipment, battery 13, compressor 14, alternator 15 and starting motor 16 generate a strong electromagnetic field.

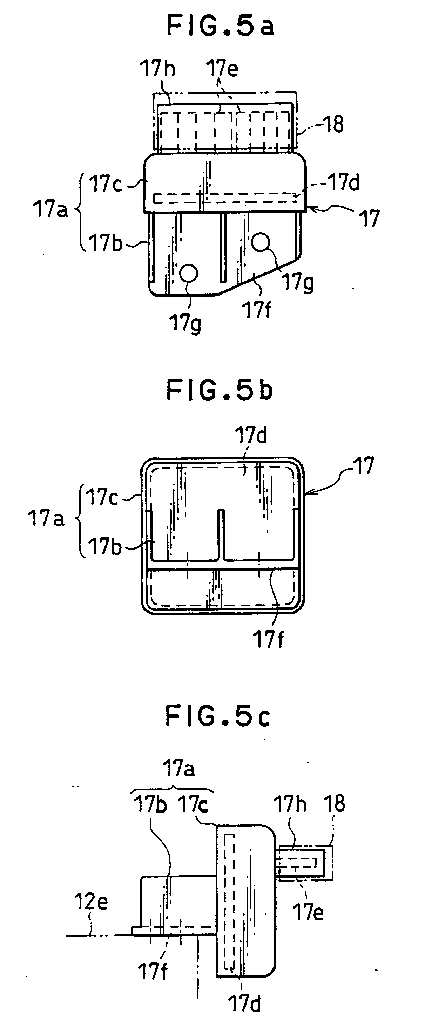

An engine control unit 17 is disposed at the RH offset portion 12d of the engine 12 where there is no effect of electromagnetic field. As shown in Fig. 5a to Fig. 5b, a main body 17a of the engine control unit 17 comprises a base body 17b and a cover 17c which are made of good conductive material such as aluminium alloy.

An integrated circuit board 17d packaged by electronic components such as a CPU is fixed on the base body 17b and is fully enclosed by the cover 17c. Further, a connecting terminal 17e of the integrated circuit board 17d projects outside through a connector 17h. The connector 17h is coupled with a connector 18 connected with a wiring harness for transmitting input and output signals to and from the engine control unit 17.

Further, a bracket 17f provided at the back of the main body 17a is fastened with one or more bolts (not shown) on the upper surface of a RH bank cylinder head 12e of the engine 12 through mounting holes 17g. Therefore, the engine itself is at the ground level and no additional ground terminal is needed.

The wiring harness is composed of an engine wiring harness arranged on the engine 12 and a body wiring harness arranged along the vehicle body 11.

The engine wiring harness is connected with miscellaneous sensors, switches (for example, coolant temperature sensor, knock sensor, oil pressure sensor, throttle angle sensor, idle switch, intake manifold pressure sensor, cam angle sensor and crank angle sensor) for detecting engine operating conditions, and miscellaneous actuators (for example, fuel injector, purge solenoid valve and ignitor) for controlling fuel and ignition timing. These sensors, switches and actuators are components related to the engine control and they are arranged on the engine 12. Further, the body wiring harness is connected with components (for example, battery 13, ignition key switch, exhaust temperature sensor, starting motor 16 and transmission control unit) disposed relatively far from the engine control unit 17.

Next, an effect of the embodiment thus constituted will be described.

In a state of the engine control unit 17 mounted on the engine 12, the connecting terminal 17e of the integrated circuit board 17d is directed in the rear downward direction along the slanted posture of the engine 12.

Therefore, since the connector 18 coupled with the connector 17h has the same slanted posture as the engine, water droplets stuck to the connector 18 drop from the engine control unit 17 along the slanted direction and as a result water droplets never soak into the inside of the engine control unit 17.

Further, since the engine control unit 17 is disposed above the RH offset portion 12d, it does not interfere with other electric parts arranged around the engine 12, thus enabling easy access to the engine control unit for maintenance.

Further, since the engine control unit 17 is directly fixed on the engine 12, sensors, switches and actuators installed on the engine 12 can be directly connected with the engine control unit 17 and this means that the length of the wiring harness can be shortened. The short length of wiring harness can not only prevent the engine control unit from being hampered by noises, but also can shorten transfer time of control signals, leading to a high controllability and high reliability of the engine control system. Further, the short length of wiring harness contributes to lowering the parts cost.

Further, since the engine control unit 17 is oriented towards a toe board of the passenger compartment, this not only facilitates the connection of the engine control unit 17 with a wiring harness in the passenger compartment, but also can reduce the length of wiring harness. Further, since the engine wiring harness is not brought into the passenger compartment, the diameter of wiring holes (holes provided on a bulkhead for wiring between the engine compartment and the passenger compartment) can be reduced, whereby a high sealing performance is obtained.

Further, since the engine control unit 17 is disposed at a remote place from where the battery 13, the air conditioner compressor 14, the alternator 15 and the starting motor 16 are located, it is possible to protect the engine control unit 17 effectively from these electric components emitting large magnetic field and electrical noises.

Further, according to the present invention, since the engine control unit 17 is disposed at a place well ventilated by the air stream from the front of the vehicle, the temperature of the engine control unit 17 hardly becomes high. Further, the location where the engine control unit 17 is disposed is well protected from splashed water or mud.

Further, since the main body 17a of the engine control unit 17 is made of material having a good heat conductivity such as aluminum alloy, the heat radiation characteristic of the unit is good. Further, since the main body 17a is directly mounted on the engine 12, heat is transferred to the engine 12 easily through the bracket 17f. Therefore, the main body 17a is kept at a relatively low temperature.

Further, since the integrated circuit board 17d can be grounded easily by just connecting the integrated circuit board 17d with the main body 17a of the unit with a lead wire, it is not necessary to prepare earth wires for connecting the integrated circuit board 17d with the engine 12.

It should be noted that the engine exemplified in the preferred embodiment is not limited to a horizontally opposed engine and it may be a V-type engine. Further, in the case where the engine is mounted horizontally with respect to the longitudinal direction, the connecting terminal 17e itself may be slanted slightly downwards.

While the presently preferred embodiment of the present invention has been shown and described, it is to be understood that this disclosure is for the purpose of illustration and that various changes and modifications may be made without departing from the scope of the invention as defined by the claims.

## Claims

1. An engine (12) comprising a left bank (12a) for internal combustion and a right bank (12b) for internal combustion, said left and right banks (12a, 12b) being staggered so as to provide a left offset portion (12c) on said left side and a right offset portion (12d) on said right side, **characterised by**:
electrical equipment (13, 14, 15) provided in either one of said left offset portion (12c) or said right offset portion (12d) for controlling said engine (12); and
an engine control unit (17) provided in the other offset portion for controlling said electrical equipment (13, 14, 15).

2. The engine (12) according to claim 1, wherein:
said engine control unit (17) is provided in an upper portion of said offset portion (12d) so as to minimize the direct effect of said noise and hazardous magnetic fields generated from said electrical equipment (13, 14, 15).

3. The engine (12) according to claim 1 or claim 2, wherein:
said electrical equipment (13, 14, 15) is installed in the other offset portion (12c) by interposing said engine (12) so as to avoid said engine control unit (17) from being directly affected by said noise and hazardous magnetic fields generated therefrom.

4. The engine (12) according to any of claims 1 to 3, wherein:
said engine control unit (17) comprises an integrated circuit board (17d) mounted on a base plate (17b) and included in a cover (17c); and
said base plate (17b) and said cover (17c) are made from a material with characteristics of good heat and electric conductivity so as to easily transfer heat thereof.

5. The engine (12) according to any of claims 1 to 4, wherein:
said engine control unit (17) is directly installed on said engine (12) in a way that a terminal (17e) of a connector (17h) is downwardly inclined.

## Patentansprüche

1. Motor (12), der eine linke Zylinderreihe (12a) zur Verbrennungskrafterzeugung und eine rechte Zylinderreihe (12b) zur Verbrennungskrafterzeugung umfasst, wobei die linke und die rechte Zylinderreihe (12a, 12b) derart versetzt angeordnet sind, dass ein linker Versatzabschnitt (12c) auf der linken Seite und ein rechter Versatzabschnitt (12d) auf der rechten Seite bereitgestellt wird, **gekennzeichnet durch**:
eine elektrische Ausrüstung (13, 14, 15), die in entweder dem linken Versatzabschnitt (12c) oder dem rechten Versatzabschnitt (12d) bereitgestellt ist, um den Motor (12) zu steuern; und
eine Motorsteuereinheit (17), die entsprechend in dem anderen Versatzabschnitt bereitgestellt ist, um die elektrische Ausrüstung (13, 14, 15) zu steuern.

2. Motor (12) nach Anspruch 1, wobei:
die Motorsteuereinheit (17) in einem oberen Abschnitt des Versatzabschnitts (12d) bereitgestellt ist, um die direkte Wirkung des Geräuschs und der gefährlichen Magnetfelder zu minimieren, die von der elektrischen Ausrüstung (13, 14, 15) erzeugt werden.

3. Motor (12) nach Anspruch 1 oder Anspruch 2, wobei:
die elektrische Ausrüstung (13, 14, 15) in dem anderen Versatzabschnitt (12c) installiert ist, indem der Motor (12) dazwischen angeordnet ist, um zu vermeiden, dass die Motorsteuereinheit (17) von dem davon erzeugten Geräusch und den gefährlichen Magnetfeldern direkt beeinträchtigt wird.

4. Motor (12) nach einem der Ansprüche 1 bis 3, wobei:
die Motorsteuereinheit (17) eine Leiterplatte mit integrierten Schaltkreisen (17d) umfasst, die auf einer Grundplatte (17b) befestigt und in einer Abdeckung (17c) enthalten ist; und
die Grundplatte (17b) und die Abdeckung (17c) aus einem Material mit den Eigenschaften von guter Wärmeleitfähigkeit und elektrischer Leitfähigkeit hergetellt sind, um Wärme leicht davon zu übertragen.

5. Motor (12) nach einem der Ansprüche 1 bis 4, wobei:
die Motorsteuereinheit (17) direkt an dem Motor (12) derart installiert ist, dass ein Anschluss (17e) eines Steckers (17h) abwärts geneigt ist.

## Revendications

1. Moteur (12) comprenant une rangée gauche (12a) pour la combustion interne et une rangée droite (12b) pour la combustion interne, lesdites rangées gauche et droite (12a, 12b) étant agencées en quinconce de façon à mettre à disposition une section décalée gauche (12c) sur ledit côté gauche et une section décalée droite (12d) sur ledit côté droit, **caractérisé par** :
un équipement électrique (13, 14, 15) prévu dans l'une des sections, soit ladite section décalée gauche (12c) soit ladite section décalée droite (12d) afin de commander ledit moteur (12) ; et
une unité de commande de moteur (17) prévue dans l'autre section décalée afin de commander ledit équipement électrique (13, 14, 15).

2. Le moteur (12), selon la revendication 1, dans lequel :
ladite unité de commande de moteur (17) est prévue dans une section supérieure de ladite section décalée (12d) de façon à minimiser l'effet direct dudit bruit et desdits champs magnétiques dangereux générés à partir dudit équipement électrique (13, 14, 15).

3. Le moteur (12), selon la revendication 1 ou la revendication 2, dans lequel :
ledit équipement électrique (13, 14, 15) est installé dans l'autre section décalée (12c) en interposant ledit moteur (12) de façon à éviter que ladite unité de commande de moteur (17) ne soit directement affectée par ledit bruit et lesdits champs magnétiques dangereux générés à partir de celui-ci.

4. Le moteur (12), selon l'une quelconque des revendications 1 à 3, dans lequel :
ladite unité de commande de moteur (17) comprend une plaquette à circuits imprimés (17d) montée sur une plaque de base (17b) et intégrée à un capot (17c) ; et
ladite plaque de base (17b) et ledit capot (17c) sont réalisés à partir d'un matériau possédant des caractéristiques de bonne conductivité thermique et de bonne conductivité électrique de façon à transférer facilement la chaleur de ceux-ci.

5. Le moteur (12), selon l'une quelconque des revendications 1 à 4, dans lequel :
ladite unité de commande de moteur (17) est directement installée sur ledit moteur (12) de manière à ce qu'une borne (17e) d'un connecteur (17h) soit inclinée vers le bas.
